# EUROPEAN PATENT SPECIFICATION

(11) **EP 2 891 691 B1**
(45) Date of publication and mention of the grant of the patent: **05.05.2021**
(21) Application number: 13832771.3
(22) Date of filing: 27.08.2013
(51) Int. Cl.: C09D 11/17, C09D 11/14

(54) **AQUEOUS PIGMENT INK COMPOSITION**
WÄSSRIGE PIGMENTTINTENZUSAMMENSETZUNG
COMPOSITION AQUEUSE D'ENCRE PIGMENTÉE

(30) Priority: 31.08.2012 JP 2012191895
(43) Date of publication of application: 08.07.2015
(73) Proprietor: Mitsubishi Pencil Company, Limited, Tokyo 140-8537 (JP)
(72) Inventor: FUJIWARA, Yoshihito, Fujioka-shi Gunma 375-8501 (JP); HIRANO, Aiko, Fujioka-shi Gunma 375-8501 (JP)
(74) Representative: Vossius & Partner Patentanwälte Rechtsanwälte mbB
(86) International application number: PCT/JP2013/072870
(87) International publication number: WO 2014/034662

(56) References cited:
- WO-A1-2014/135635
- JP-A- H0 476 074
- JP-A- 2002 211 184
- JP-A- 2002 265 841
- JP-A- 2003 113 340
- JP-A- 2003 213 191
- JP-A- 2008 231 410
- JP-A- 2012 136 657
- US-A1- 2012 073 468

## Description

### Technical Field

The present invention relates to an aqueous pigment ink composition
which can be used for writing instruments and utilised for writing on writing boards such as white boards and black boards having non-absorbing surfaces and which is excellent in a suitable waterproof fixing property but can readily be erased.

### Background Art

Inks comprising a release agent and, if necessary, a release aid so that lines can readily be erased with soft dry cloth and paper when written on a non-absorbing surface have so far primarily been used as so-called aqueous marking pen inks for boards (refer to, for example, patent document 1). In the above case, inks providing lines which can readily be released are required, and a performance in which the lines cannot be erased even by trying to erase lines, that is, a so-called fixing property has to be undesirable. Ordinarily, an indoor place which is not exposed to the weather is selected as atmosphere in which such the ink as described above is used.

In recent years, however, present are many users such as stores making use of white boards or black boards as signboards in front stores. In order to meet the above demands, disclosed are ink compositions for writing instruments which contains a masking colourant such as titanium oxide and with which remarkable lines can be drawn on a black board (refer to, for example, patent document 2). In the above case, great importance is put on writability and erasability, and no countermeasures for a case in which the drawn lines are exposed to the weather are disclosed.

In contrast with this, ink compositions which provide a waterproof coating film and which can readily be released and removed after finished in use are disclosed for use in signboards and displays indoors and outdoors (refer to, for example, patent document 3). In the above case, a water-soluble emulsion containing a binder resin is constituted to prepare an ink therefrom, and therefore the fixing property is satisfactory. However, the drawn lines are erased or released by "cutting the lines off by a utility knife", and it is absolutely impossible to readily erase the drawn lines.

In contrast with the so-called inks for board markers described above, disclosed are ink compositions providing handwritings which are not peeled off when exposed to the weather but can readily be erased when rubbed with a wet wiping material and the like (refer to, for example, patent document 4). In the waterproof test of the above case, it is tested whether drawn lines are released when water is sprayed ten times thereon, and however, the condition cannot be comparable to a situation in which the drawn lines are continuously exposed only to misty rain. Furthermore, it is considered that the drawn lines cannot stand any more the situation of ordinary rainfall.

On the other hand, aqueous ink compositions for ballpoint pens containing at least a colourant, water, a shear thinning modifier such as xanthane gum, and trehalose are known as ink compositions containing trehalose (refer to, for example, patent document 5).

However, the above ink compositions are used for ballpoint pens, and the existing situation is that even if the ink compositions are applied without modification to board markers for writing boards such as white boards having non-absorbing surfaces, or even if trehalose is added to conventional ink compositions for writing boards, the effects of the present invention cannot be exerted.

### Conventional Art Documents

### Patent documents

Patent document 1: JP-A Hei 5-171092 (claims, embodiments including paragraphs [0031] to [0034], Example 1 and others)
Patent document 2: JP-A 2006-28291 (claims, embodiments, examples and others)
Patent document 3: JP-A 2000-63717 (claims, embodiments including paragraph [0029])
Patent document 4: JP-A 2003-313484 (claims, embodiments, examples and others including paragraph [0030])
Patent document 5: JP-A 2003-113340 (claims, embodiments, examples and others)

US 2012/073468 (A1) describes an ink composition including a slightly water-soluble alkanediol having 7 to 10 carbon atoms and a cyclodextrin compound.

JP 2003-213191 (A) describes an aqueous erasable marking pen ink composition containing a resin and an O/W emulsion which is prepared from water as solvent, a colorant, and a specific oily substance by using a nonionic surfactant as emulsifier.

JP 2002-265841 (A) describes a water-based erasable ink composition for the marking pen, comprising (a) water as solvent, (b) an acidic carbon black as coloring matter, (c) a dispersant, (d) an emulsion of an oily material hardly volatile at normal temperature, and (e) a resin.

JP 2008-231410 (A) describes an ink composition for a writing material, comprising specific pigment particles.

JP 2003-113340 (A) describes a water-based ink composition for ball-point pens, essentially comprising a colorant, water, a shearing diminished viscosity-imparting agent, and trehalose.

JP H04-76074 (A) describes a water-based ink for writing instruments, compising pigment and one or more sugars selected from sugars represented by the cited formulae.

JP 2002-211184 (A) describes a writing utensil filled with ink having a dry-up delaying action.

JP 2012-136657 (A) describes an erasable ink composition for a note-taking board, comprising at least a pigment, organic solvents, a coating film forming resin, a perfluoro group-containing surfactant, and a remover agent.

### Disclosure of the Invention

### Problems to be solved by the Invention

In light of the progress in development of the conventional art, the problems thereof and the existing situation each described above, the present invention tries to solve the problems, and an object thereof is to provide an aqueous pigment ink composition providing lines drawn on a non-absorbing surface which are excellent in a suitable waterproof fixing property but can readily be erased and to further provide an aqueous pigment ink composition providing drawn lines which do not allow afterimages to remain.

### Means for solving the Problems

In light of the conventional problems and the like described above, intense researches repeated by the present inventors have resulted in **the finding that** an aqueous ink composition meeting the object described above is obtained, though the reason therefor is not certain, by adding an additive having a lot of hydrophilic functional groups, for example, such as sugars to an aqueous pigment ink composition. Thus, the present invention has been completed.

That is, the present invention resides in the following items (1) to (10) .
(1) An aqueous pigment ink composition **for board marker** characterised by
   comprising at least
   a masking pigment,
   1 to 10 % by mass of a styrene-acrylate resin and/or
   a styrene-maleate resin,
   0.1 to 15 % by mass of trehalose,
   a fluorinated surfactant,
   and water,
   each based on a total amount of the ink composition.
(2) The aqueous pigment ink composition **for board marker as described in the above item** (1),
   characterised in that
   a content of the masking pigment is 0.1 to 35 % by mass, and
   a content of the fluorinated surfactant is 0.005 to 0.3 % by mass,
   each based on a total amount of the ink composition.
(3) The aqueous pigment ink composition **for board marker as described in the above item** (1) or (2), characterised in that the masking pigment is titanium dioxide.
(4) The aqueous pigment ink composition **for board marker as described in the above item** (3), characterised by further comprising a fluorescent pigment in addition to the masking pigment.
(5) The aqueous pigment ink composition **for board marker as described in the above item** (3), characterised by further comprising a pigment of a chromatic colour in addition to the masking pigment.
(6) The aqueous pigment ink composition **for board marker as described in the above item** (3), characterised by further comprising a coloured emulsion in addition to the masking pigment.
(7) The aqueous pigment ink composition **for board marker as described in the above item** (1) or (2), characterised in that the masking pigment is carbon black.
(8) The aqueous pigment ink composition **for board marker as described in anyone of the** above items (1) to (7), characterised by further comprising a dye in addition to the masking pigment.
(9) The aqueous pigment ink composition **for board marker as described in any one of the** above items (1) to (8), characterised by further comprising a water-soluble organic solvent.
(10) The aqueous pigment ink composition **for board marker as described in any one of the** above items (1) to (9), characterised in that the pH of the ink composition is 6.5 to 10.5.

### Effect of the Invention

According to the present invention, provided is an aqueous pigment ink composition which is excellent in a writing property on a non-absorbing surface of a white board and also excellent in a waterproof fixing property but excellent as well in erasability.

### Embodiment for the Invention

The embodiment of the present invention shall be explained below in detail.

The aqueous pigment ink composition of the present invention is characterised by comprising at least a masking pigment, a styrene-acrylate resin and/or a styrene-maleate resin, trehalose, a fluorinated surfactant and water, **as defined in the claims.**

The masking pigment used in the present invention shall not specifically be restricted as long as the pigment comprises particles exerting a masking property and a whiteness, and the pigment includes, for example, at least one kind (alone or two or more kinds thereof, hereinafter the same shall apply) selected from titanium oxide, lead oxide and hollow resin particles. The above particles may be masking particles which are subjected to lipophilic surface treatment on a particle surface with such as organotitanate.

The masking particles used include preferably titanium oxide used alone and titanium oxide used in combination with such as hollow resin particles and anisotropic resin particles from the viewpoint of having a high masking property and capable of providing clear handwritings. A content of titanium oxide is preferably 0.1 to 35 % by mass, (hereinafter referred to merely as "%"), more preferably 1 to 30 % based on a total amount of the ink composition.

The masking pigment having an average particle diameter of 0.05 to 20 µm is preferably used, and an average particle diameter thereof is set particularly preferably to 0.1 to 10 µm.

In the present invention, colourants such as a fluorescent pigment, a pigment of a chromatic colour other than pigments of white, black and grey colours, a coloured emulsion and a dye can be further added in order to draw colourful lines by the ink composition.

Capable of being used as the pigment of a chromatic colour described above are inorganic and organic pigments which have so far been publicly known as used for aqueous pigment ink compositions, resin particle pigments containing pigments, coloured emulsion pigments obtained by mixing such as a fluorescent dye to prepare a solid solution in a resin matrix, and pigments obtained by coating iron oxide and titanium oxide in a multilayer on a surface of a base material such as silica and mica.

To be more specific, the pigments are organic pigments of a chromatic colour and coloured emulsion pigments and include such as azo type pigments, condensed azo type pigments, phthalocyanine type pigments, anthraquinone type pigments, perylene type pigments, perinone type pigments, quinacridone type pigments, dioxazine type pigments, thioindigo type pigments, and isoindolinone type pigments.

The above pigments can be used alone or in a mixture of two or more kinds thereof.

On the other hand, when a non-absorbing surface of an object for writing has a white colour or a slight pale colour (for example, such as yellow colour), a black pigment can be used as the masking pigment.

To be specific, the pigments are such as carbon black, spherical graphite particles, black iron oxide, and black spherical resin particles. The carbon black which can be used includes, for example, such as channel black, furnace black acetylene black, and thermal black.

A content of the above black pigments is 0.1 to 35 %, further preferably 0.1 to 20 % and more preferably 1 to 15 % based on a total amount of the ink composition.

The carbon black particles having an average particle diameter of 0.05 to 1 µm are preferably used, and an average particle diameter thereof is set particularly preferably to 0.05 to 0.5 µm.

The total content of the colouring materials other than the masking pigments described above, such as the fluorescent pigment, the pigment of a chromatic colour other than pigments of white, black and grey colours, the coloured emulsion and the dye can suitably be increased or decreased according to aa intensity of lines drawn by the ink, and the content is preferably 0.1 to 40 %, more preferably 0.1 to 12 % based on a total amount of the ink composition.

The styrene-acrylate resin and the styrene-maleate resin are used as both of a dispersant and a fixing resin for the pigment described above.

The styrene-acrylate which can be used includes JONCRYL 52J, JONCRYL 57J, JONCRYL 60J, JONCRYL 61J and JONCRYL 62J (all above, manufactured by BASF A.G.), RS-1191, VS-1047 and YS-1274 (all above, manufactured by Seiko PMC Corporation), and the styrene-maleate resin includes ARASTAR 700 and ARASTAR 703S (all above, manufactured by Arakawa Industries, Ltd.), and SMA-1440, SMA-2625 and SMA-17352 (all above, manufactured by Kawahara Petrochemical Co., Ltd.).

The styrene-acrylate resin is preferably used from the viewpoints of a reason on processability in the production, an aging stability of the ink composition and stability in the solution of the trehalose.

The total content of the styrene-acrylate resin and/or the styrene-maleate resin is 1 to 10 % in terms of a solid concentration based on a total amount of the ink composition.

If the above content is less than 0.5 %, the ink composition becomes unstable in aging, and therefore the less content is not preferred. On the other hand, if the content exceeds 20 %, the ink composition is drastically viscous, and trehalose cannot be solidified, so that the more content is not preferred.

The trehalose used in the present invention is used as an additive acting as a waterproof fixing agent, and trehalose does not deteriorate the performances of the ink when trehalose is blended in the aqueous pigment ink composition.

A content of the above trehalose is 0.1 to 15 %, preferably 0.5 to 8 % based on a total amount of the ink composition.

If the above content is less than 0.1 %, an effect thereof as the waterproof fixing agent is low, and therefore it is not preferred. On the other hand, if the content exceeds 15 %, the aqueous pigment ink composition becomes too viscous, and crystallised out from the pen tip is caused at low temperature and is unsightly, or a problem on a storage stability of the ink is brought about. Accordingly, the content is not preferred.

The fluorinated surfactant used in the present invention is added in order to enhance an adhesive property of lines drawn by the above ink composition onto a non-absorbing surface of a white board which is a surface to be written and in turn further raise a waterproof fixing property of lines onto the surface.

The fluorinated surfactant which can be used includes compounds containing polymers having a high molecular weight, such as perfluoroalkenyl ethylene oxide adducts, perfluoroalkyl group adducts, and perfluorobutanesulfonic acid group adducts.

The fluorinated surfactant includes preferably 1) compounds having a double bond and a branched perfluoroalkenyl structure in a molecule, for example, compounds comprising hexafluoropropene oligomers [(CF₃)₂CF]₂C=C(F)CF₃] (FTERGENT 100, ditto 100C, ditto 110, ditto 140A, ditto 150, ditto 150CH, ditto A-K, ditto 501, ditto 250, dittc 251, ditto 222F, ditto 300, ditto 310, ditto 400SW, manufactured by Neos Co., Ltd.), and 2) compounds having a perfluorobutanesulfonate group (FC-4430, FC-4432, manufactured by 3M Japan Limited).

A content cf the above fluorinated surfactants is preferably 0.001 to 0.3 %, more preferably 0.001 to 0.2 % and particularly preferably 0.005 to 0.05 % in terms of a solid concentration based on a total amount of the ink composition.

If the above content is less than 0.001 %, the ink is reduced in a wetting property on a non-absorbing surface, and therefore the less content is not preferred. On the other hand, if the content exceeds 0.3 %, the ink is too wettable on a non-absorbing surface, and the waterproof fixing property is rather weakened. Accordingly, the more content is not preferred.

In the aqueous pigment ink composition of the present invention, ammonia, aminomethylpropanol or triethanolamine is preferably added as a pH modifier to control a pH of the ink composition to preferably 6.5 to 10.5, more preferably 7.5 to 10.0 from the viewpoint of enhancing stability in the solution of the acrylate type resin in the ink composition, that is, a dispersion stability of the pigment in the ink composition.

If the pH is lower than 6.5, the acrylate type resin has a problem on stability in the solution, and on the other hand, if the pH exceeds 10.5, a problem is brought about on a drying property and a fixing property of the drawn lines in a certain case.

The aqueous pigment ink composition of the present invention is prepared by addition of water such as refined water, distilled water, ion-exchanged water, and purified water as a balance in addition to the respective components described above, and optional components such as an antimicrobial agent, a defoaming agent, and a thickener in addition to the respective components described above can suitably be added as long as the effects of the present invention are not damaged.

The aqueous pigment ink composition of the present invention which exerts satisfactorily the purposed performance and effects can be obtained by constituting from the components described above. In this regard, lines drawn by the above ink composition were erased after long time passed, and then the drawn lines were observed in detail to find slightly the phenomenon that the traces of the drawn lines, hereinafter referred to as "ghost" remained. The ghost is observed as opaque traces on a board, and in a minor case, the ghost is transparent traces of the drawn lines. Researches further promoted in order to further prevent the above ghost from coming into existence have resulted in finding that the ghost is further inhibited from appearing by addition of some kind of a water-soluble organic solvent.

In the present invention, the water-soluble organic solvent used for inhibiting the ghost described above is preferably solvents containing sugars other than trehalose.

The examples of the sugars which can be used include, monosaccharides, disaccharides, oligosaccharides (including trisaccharides and tetrasaccharides) and polysaccharides, and the sugars include preferably such as glucose, mannose, fructose, ribose, xylose, arabinose, galactose, maltose, cellobiose, lactose, sucrose, and maltotriose. In this connection, the polysaccharides mean sugars in a broad sense and shall be used in such a sense as including substances present widely in the nature, such as α-cyclodextrin and cellulose.

The derivatives of the above sugars include reducing sugars of the sugars described above (for example, sugar alcohols [general formula HOCH₂(CHOH)ₙCH₂OH (n = an integer of 2 to 5)]), oxidised sugars (for example, such as aldonic acid and uronic acid), amino acids, thio acids and the like. The sugar alcohols are particularly preferred, and the specific examples thereof include such as D-sorbitol, sorbitan, maltitol, erythritol, lactitol, and xylitol.

The above water-soluble organic solvents can be used alone or in combination of two or more kinds thereof, and solvents are used in a range of 1 to 20 %, preferably 2 to 10 % based on a total amount of the ink composition. If a content of the above water-soluble organic solvent is less than 1 %, no effect is shown to inhibition of the ghost, and on the other hand, the content exceeding 20 % results in notably deteriorating the waterproof fixing property or promoting the ghost in a certain case.

The aqueous pigment ink composition of the present invention is produced by mixing and crushing the respective components in the contents falling in the ranges described above by means of a publicly known dispersing equipment, for example, such as a ball mill, a roll mill, a sand mill, a flow mill, a Dyno-mill, and an attritor. Coarse particles and dusts are removed, if necessary, from an intermediate product obtained by stirring and mixing or mixing and crushing the respective components by a method such as filtration and, centrifugal precipitation, whereby the purposed aqueous pigment ink composition is readily obtained.

Also, the aqueous pigment ink composition of the present invention can suitably be used for writing instruments utilised for writing on writing boards having non-absorbing surfaces, such as white board markers and black board markers.

In the aqueous pigment ink composition of the present invention thus constituted, the drawn lines are excellent in a waterproof fixing property because of an effect of suitably inhibiting water from vaporising in a non-absorbing surface-ink interface in lines drawn on a non-absorbing surface. The detailed action mechanism thereof is guessed as follows.

The trehalose used is **a disaccharide** having plural hydroxyl groups, and it is said that a **bond** angle of an oxygen atom connecting two six-membered rings is the same as a bond angle of an oxygen atom of water molecule. Therefore, obtained is an effect of inhibiting water to some extent from vaporising from an aqueous ink due to a hydrogen bond with a water molecule. Since a surface on which lines are drawn is a non-absorbing surface, moisture does not permeate into paper as is the case with a paper surface, and the moisture is lost only through a process of vaporization into the air. As a result thereof, the moisture is inhibited from vaporising from the aqueous ink contained in the lines drawn on a non-absorbing surface of a white board or a black board to dry the lines, and fixation of the drawn lines progress slowly. The styrene-acrylate resin or the styrene-maleate resin contained in the drawn lines is slowly fixed as well, and therefore it is guessed that the drawn lines are adhered slowly and densely in a non-absorbing surface-ink interface.

Accordingly, it is guessed that the resin is not readily dissolved and does not flow out even if raindrops fall on the dried drawn lines. On the other hand, however, it is guessed that when wiped with a wet cloth with force, the drawn lines cannot keep fixation by a suitable adhesion force of the above degree and are erased.

In this connection, when the water-soluble organic solvent is not added to the aqueous pigment ink composition having the composition described above according to the present invention, ghost is slightly observed, as described above, in a certain case after long time passes. This is presumably because the styrene-acrylate resin or the styrene-maleate resin contained in the drawn lines is strongly fixed too much so that the resin is fixed and still remains even after the drawn lines are erased. In order to meet the above phenomenon, the water-soluble organic solvent is further added to the ink composition of the present invention, whereby the drawn lines in which contained is a neutralising agent present in dissolving the styrene-acrylate resin or the styrene-maleate resin are dried and solidified, and therefore this is presumably because the above resins are dissolved again in wiping with a wet cloth so that the drawn lines can be erased without allowing the traces of the drawn lines to remain.

### EXAMPLES

Next, the present invention shall be explained in further details with reference to examples and comparative examples, but the present invention shall not be restricted by the examples shown below.

### Examples 1 to 17 and Comparative Examples 1 to 4

The components were mixed and dispersed using a homogenising mixer and a disperser in blend compositions shown in the following Table 1 and Table 2 to prepare the respective aqueous pigment ink compositions.

The respective aqueous pigment ink compositions obtained above as shown in Table 1, which were prepared in Examples 1 to 11 and Comparative Examples 1 to 4 were used to evaluate
(1) pH of the ink compositions, (2) a waterproof fixing property A for initial, (3) a waterproof fixing property B for after three months pass at 50 °C, and (4) erasability with a wet matter for initial drawn lines **by the following test methods.**

Further, the respective aqueous pigment ink compositions shown in Table 2, which were prepared in Examples 12 to 17 were used to evaluate (5) erasability with a wet matter for ghost and drawn lines after three months pass outdoors in addition to items (1) to (4) by the following test methods.

The results thereof are shown in the following Table 1 and Table 2.

### Test methods:

### (1) pH of the ink compositions:

The respective aqueous pigment ink compositions were measured (25 °C) by means of HORIBA PH/ ION METER F-24 manufactured by HORIBA, Ltd.

### (2) Waterproof fixing property A for initial:

A pen body of PC-5M manufactured by Mitsubishi Pencil Co., Ltd. was charged with the respective aqueous pigment ink compositions to draw eight times fivefold spirals having a width of 15 mm on a black board or a white board under an environment of a temperature of 25 °C and humidity of 65 %, and tap water was sprayed on the board from a nozzle of a commercial shower in a flow rate of 12 litres per minute. Subsequently, the state of the drawn lines was observed to evaluate the state according to the following evaluation criteria (n = 10):

### Evaluation criteria:

⊚: No change was observed at all on the drawn lines
○: the drawn lines turned into pale slightly in a hue, or a part thereof was broken
Δ: the drawn lines turned into pale significantly in a hue, or a half or a greater part thereof was erased
▲: a hue of the drawn lines and a part of the form thereof remained, but it was difficult to imagine the original form
×: all of the drawn lines flowed away and were erased

### (3) Waterproof fixing property B after three months pass at 50 °C:

A pen body of PC-5M manufactured by Mitsubishi Pencil Co., Ltd. was charged with the respective aqueous pigment ink compositions, and the pen was stored in an environment of 50 °C for three months and allowed to be put back to ambient temperature (25 °C) to test and evaluate it the according to the same evaluation criteria as in (2) described above (n = 10) .

### (4) Erasability A with a wet matter for initial drawn lines:

A pen body of PC-5M manufactured by Mitsubishi Pencil Co., Ltd. was charged with the respective aqueous pigment ink compositions to draw eight times fivefold spirals having a width of 15 mm on a black board or a white board under an environment of a temperature of 25 °C and a humidity of 65 %, and KIMTOWEL as experimental paper wipes, manufactured by NIPPON PAPER CRECIA Co., Ltd., was impregnated with about 25 g of tap water to rub the board once with drawn lines while keeping horizontally the board. The state of the drawn lines after rubbed was observed to evaluate the state according to the following evaluation criteria (n = 10):

### Evaluation criteria:

⊚: drawn lines could be erased by press horizontally a force without mounting a weight
○: drawn lines could be erased by press with a force of 7.84 N of weight of 0.8 kg or less from upside
Δ: drawn lines could be erased by press with a force of 9.8 N of weight of 1 kg or less from upside
**▲:** drawn lines could be erased by press with a force exceeding 9.8 N of weight of 1 kg from upside
×: drawn lines could not be erased even by press with a force of 19.6 N of weight of 2 kg from upside

### (5) Erasability B with a wet matter (ghost, drawn lines after three months pass outdoors):

A pen body of PC-5M manufactured by Mitsubishi Pencil Co., Ltd. was charged with the respective aqueous pigment ink compositions to draw eight times fivefold spirals having a width of 15 mm on a black board or a white board under an environment of a temperature of 25 °C and a humidity of 65 %, and the board was left standing outdoors for three months. Then, KIMTOWEL, experimental paper wipes, manufactured by NIPPON PAPER CRECIA Co., Ltd., was impregnated with about 25 g of tap water to rub the board with the wet paper wipes until a hue of the drawn lines faded while keeping horizontally the board. The state of the drawn lines after erased was observed to evaluate the state according to the following evaluation criteria (n = 10):

### Evaluation criteria:

⊚: no trace of the drawn lines remained
○: transparent traces of the drawn lines remained
Δ: pale opaque traces of the drawn lines remained
**▲:** opaque traces of the drawn lines remained
×: wrinkles were produced on the surface of the board, and the surface looked white
-: drawn lines could not be erased and could not be evaluated.

**Table 1**

| (total amount: 100 % by mass) | | | | | | | | | | | | | | | | |
|---|---|---|---|---|---|---|---|---|---|---|---|---|---|---|---|---|
| | | Example | | | | | | | | | | | Comparative Example | | | |
| | | 1 | 2 | 3 | 4 | 5 | 6 | 7 | 8 | 9 | 10 | 11 | 1 | 2 | 3 | 4 |
| Hue | | black | black | white | white | red | blue | fluorescent pink | light blue | white | white | white | black | white | white | fluorescent pink |
| Masking pigment | Titanium oxide CR-95 *1 | | | 30 | 30 | 25 | 25 | 25 | 20 | 30 | 30 | 30 | | 30 | 30 | 25 |
| | Carbon black MCF88*2 | 10 | 10 | | | | | | | | | | 10 | | | |
| Pigment | Fuji Red 2510 *3 | | | | | 10 | | | | | | | | | | |
| | Phathalocyanine Blue 5187 *4 | | | | | | 10 | | 2 | | | | | | | |
| | Emulsion pigment *5 | | | | | | | 10 | | | | | | | | 10 |
| Resin | Styrene acrylate resin *6 Styrene maleate resin *7 | 10 | 10 | 10 | 10 | 10 | 10 | 10 | 4 | 10 | 10 | 10 | 10 | 10 | 10 | 10 |
| pH modifier | Ammonia | 1 | 1 | | | | | | | | | | 1 | | | |
| | Aminomethylpropanol | | | 1 | 1 | 1 | 1 | 1 | 1 | | 5 | 1 | | 1 | 1 | 1 |
| Waterproof fixing agent | Trehalose | 2 | 13 | 1 | 13 | 1 | 1 | 1 | 1 | 1 | 1 | 1 | | | 1 | |
| Surfactant | Fluorinated surfactant *8 | 0.01 | 0.01 | 0.01 | 0.01 | 0.01 | 0.01 | 0.05 | 0.01 | 0.01 | 0.01 | 0.2 | 0.01 | 0.01 | | 0.2 |
| Fungicide | Sodium benzoate | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Water | Refined water | balance | balance | balance | balance | balance | balance | balance | balance | balance | balance | balance | balance | balance | balance | balance |
| pH | 25 °C | 8.0 | 7.9 | 8.7 | 9.3 | 8.5 | 8.9 | 7.7 | 7.6 | 6.8 | 10.2 | 9.5 | 8.0 | 8.9 | 8.9 | 7.6 |
| Evaluation | Waterproof fixing property A: initial | ⊚ | ○ | ⊚ | ○ | ⊚ | ⊚ | ⊚ | ⊚ | ⊚ | ○ | ○ | ▲ | Δ | × | ▲ |
| | Waterproof fixing property B: aged (50 °C, 3 months) | ⊚ | ○ | ⊚ | ○ | ⊚ | ⊚ | ○ | ○ | ○ | ⊚ | ○ | × | Δ | × | ○ |
| | Erasability with wet matter: initial | © | ○ | ⊚ | ○ | ⊚ | ⊚ | ○ | ○ | ⊚ | ○ | ○ | ▲ | ▲ | × | × |

**Table 2**

| (total amount: 100 % by mass) | | | | | | | |
|---|---|---|---|---|---|---|---|
| | | Example | | | | | |
| | | 12 | 13 | 14 | 15 | 16 | 17 |
| Hue | | white | red | blue | white | red | blue |
| Masking pigment | Titanium oxide CR-95 *1 | 30 | 25 | 25 | 30 | 25 | 25 |
| | Carbon black MCF88 *2 | | | | | | |
| Pigment | Fuji Red 2510 *3 | | 10 | | | 10 | |
| | Phthalocyanine Blue 5187 *4 | | | 10 | | | 10 |
| | Emulsion pigment *5 | | | | | | |
| Resin | Styrene acrylate resin *6 | 10 | 10 | 10 | 10 | 10 | 10 |
| | Styrene maleate resin *7 | | | | | | |
| pH modifier | Ammonia | | | | | | |
| | Aminomethylpropanol | 1 | 1 | 1 | 1 | 1 | 1 |
| Waterproof fixing agent | Trehalose | 1 | 1 | 1 | 1 | 1 | 1 |
| Water-soluble organic solvent | D-sorbitol | 5 | 5 | 5 | 11 | 11 | 11 |
| Surfactant | Fluorinated surfactant *8 | 0.01 | 0.01 | 0.01 | 0.01 | 0.01 | 0.01 |
| Fungicide | Sodium benzoate | 0.1 | 0.1 | 0.1 | 0.1 | 0.1 | 0.1 |
| Water | Refined water | balance | balance | balance | balance | balance | balance |
| pH | 25 °C | 7.6 | 8.0 | 9.7 | 8.1 | 8.0 | 9.4 |
| Evaluation | Waterproof fixing Property A: initial | ⊚ | ⊚ | ⊚ | ○ | ○ | ○ |
| | Waterproof fixing Property B: aged (50 °C, 3 months) | ⊚ | ⊚ | ⊚ | ○ | ○ | ○ |
| | Erasability with wet matter: initial | ⊚ | ⊚ | ⊚ | ⊚ | ⊚ | ⊚ |
| | Erasability with wet matter: aged drawn line (ghost) | ⊚ | ⊚ | ○ | ○ | ○ | ○ |

*1 to *8 in Table 1 and Table 2 described above show the following.
*1: manufactured by Ishihara Sangyo Kaisha Ltd.
*2: manufactured by Mitsubishi Chemical Corporation
*3: manufactured by Fuji Pigment Co., Ltd.
*4: manufactured by Dainichiseika Color & Chemicals Mfg. Co., Ltd.
*5: pink colour, NKW3207E (non-volatile matters: 37.0 %), manufactured by Nihon Keiko Co., Ltd.
*6: JONCRYL 61J (non-volatile matters: 30.5 %), manufactured by BASF A.G.
*7: ARASTAR 703S (non-volatile matters: 30 %), manufactured by Arakawa Industries, Ltd.
*8: FTERGENT 251, manufactured by Neos Co., Ltd.

As apparent from the results shown in Table 1 and Table 2 described above, it has become confirmed that the ink compositions prepared in Examples 1 to 17 falling in the scope of the present invention are excellent at least in a waterproof fixing property in the initial stage and after an aged **stage as compared** with the ink compositions prepared in Comparative Examples 1 to 4 **which are outside of the scope of the present invention** and that Examples are excellent in erasability with a wet matter in the initial stage. Further, it has become confirmed that in Examples 12 to 17 shown in Table 2, the lines drawn after three months pass outdoors are excellent as well in erasability with a wet matter (ghost) by further adding the water-soluble organic solvent.

In contrast with **the above described, considering** the comparative examples, trehalose was not added in Comparative Examples 1, 2, and 4, and the fluorinated surfactant was not added in Comparative Example 3. It has become confirmed that in the above cases, the effects of the present invention cannot be exerted.

### Industrial Applicability

Obtained is an aqueous pigment ink composition which can suitably be used for writing instruments utilised as white board markers and black board markers such as marking pens, and felt-tip pens.

## Claims

1. An aqueous pigment ink composition for board marker **characterised by** comprising at least
a masking pigment,
1 to 10 % by mass of a styrene-acrylate resin and/or
a styrene-maleate resin,
0.1 to 15 % by mass of trehalose,
a fluorinated surfactant,
and water,
each based on a total amount of the ink composition.

2. The aqueous pigment ink composition for board marker as described in claim 1, **characterised in that**
a content of the masking pigment is 0.1 to 35 % by mass, and
a content of the fluorinated surfactant is 0.005 to 0.3 % by mass,
each based on a total amount of the ink composition.

3. The aqueous pigment ink composition for board marker as described in claim 1 or 2, **characterised in that** the masking pigment is titanium dioxide.

4. The aqueous pigment ink composition for board marker as described in claim 3, **characterised by** further comprising a fluorescent pigment in addition to the masking pigment.

5. The aqueous pigment ink composition for board marker as described in claim 3, **characterised by** further comprising a pigment of a chromatic colour in addition to the masking pigment.

6. The aqueous pigment ink composition for board marker as described in claim 3, **characterised by** further comprising a coloured emulsion in addition to the masking pigment.

7. The aqueous pigment ink composition for board marker as described in claim 1 or 2, **characterised in that** the masking pigment is carbon black.

8. The aqueous pigment ink composition for board marker as described in any one of claims 1 to 7, **characterised by** further comprising a dye in addition to the masking pigment.

9. The aqueous pigment ink composition for board marker as described in any one of claims 1 to 8, **characterised by** further comprising a water-soluble organic solvent.

10. The aqueous pigment ink composition for board marker as described in any one of claims 1 to 9, **characterised in that** the pH of the ink composition is 6.5 to 10.5.

## Patentansprüche

1. Eine wässrige Pigmenttintenzusammensetzung für Boardmarker, **dadurch gekennzeichnet, dass** sie mindestens
ein Maskierungspigment,
1 bis 10 Massen-% eines Styrol-Acrylat-Harzes und/oder eines Styrol-Maleat-Harzes,
0,1 bis 15 Massen-% Trehalose,
ein fluoriertes grenzflächenaktives Mittel
und Wasser,
jeweils bezogen auf eine Gesamtmenge der Tintenzusammensetzung,
umfasst.

2. Die wässrige Pigmenttintenzusammensetzung für Boardmarker wie in Anspruch 1 beschrieben, **dadurch gekennzeichnet, dass**
ein Gehalt des Maskierungspigments 0,1 bis 35 Massen-% beträgt und
ein Gehalt des fluorierten grenzflächenaktiven Mittels 0,005 bis 0,3 Massen-% beträgt, jeweils bezogen auf eine Gesamtmenge der Tintenzusammensetzung.

3. Die wässrige Pigmenttintenzusammensetzung für Boardmarker wie in Anspruch 1 oder 2 beschrieben, **dadurch gekennzeichnet, dass** das Maskierungspigment Titandioxid ist.

4. Die wässrige Pigmenttintenzusammensetzung für Boardmarker wie in Anspruch 3 beschrieben, **dadurch gekennzeichnet, dass** sie weiter ein fluoreszierendes Pigment zusätzlich zu dem Maskierungspigment umfasst.

5. Die wässrige Pigmenttintenzusammensetzung für Boardmarker wie in Anspruch 3 beschrieben, **dadurch gekennzeichnet, dass** sie weiter ein chromatisches Farbpigment zusätzlich zu dem Maskierungspigment umfasst.

6. Die wässrige Pigmenttintenzusammensetzung für Boardmarker wie in Anspruch 3 beschrieben, **dadurch gekennzeichnet, dass** sie weiter eine Farbemulsion zusätzlich zu dem Maskierungspigment umfasst.

7. Die wässrige Pigmenttintenzusammensetzung für Boardmarker wie in Anspruch 1 oder 2 beschrieben, **dadurch gekennzeichnet, dass** das Maskierungspigment Ruß ist.

8. Die wässrige Pigmenttintenzusammensetzung für Boardmarker wie in einem der Ansprüche 1 bis 7 beschrieben, **dadurch gekennzeichnet, dass** sie weiter einen Farbstoff zusätzlich zu dem Maskierungspigment umfasst.

9. Die wässrige Pigmenttintenzusammensetzung für Boardmarker wie in einem der Ansprüche 1 bis 8 beschrieben, **dadurch gekennzeichnet, dass** sie weiter ein wasserlösliches organisches Lösungsmittel umfasst.

10. Die wässrige Pigmenttintenzusammensetzung für Boardmarker wie in einem der Ansprüche 1 bis 9 beschrieben, **dadurch gekennzeichnet, dass** der pH der Tintenzusammensetzung 6,5 bis 10,5 beträgt.

## Revendications

1. Composition aqueuse d'encre pigmentée pour marqueur de tableau, **caractérisée en ce qu'**elle comprend au moins
un pigment de masquage,
1 à 10 % en masse d'une résine de styrène-acrylate et/ou d'une résine de styrène-maléate,
0,1 à 15 % en masse de tréhalose,
un tensioactif fluoré,
et de l'eau,
chacun par rapport à une quantité totale de la composition d'encre.

2. Composition aqueuse d'encre pigmentée pour marqueur de tableau comme décrit dans la revendication 1, **caractérisée en ce que**
une teneur en pigment de masquage est de 0,1 à 35 % en masse, et
une teneur en tensioactif fluoré est de 0,005 à 0,3 % en masse,
chacune par rapport à une quantité totale de composition d'encre.

3. Composition aqueuse d'encre pigmentée pour marqueur de tableau comme décrit dans la revendication 1 ou 2, **caractérisée en ce que** le pigment de masquage est le dioxyde de titane.

4. Composition aqueuse d'encre pigmentée pour marqueur de tableau comme décrit dans la revendication 3, **caractérisée en ce qu'**elle comprend en outre un pigment fluorescent en plus du pigment de masquage.

5. Composition aqueuse d'encre pigmentée pour marqueur de tableau comme décrit dans la revendication 3, **caractérisée en ce qu'**elle comprend en outre un pigment d'une couleur chromatique en plus du pigment de masquage.

6. Composition aqueuse d'encre pigmentée pour marqueur de tableau comme décrit dans la revendication 3, **caractérisée en ce qu'**elle comprend en outre une émulsion colorée en plus du pigment de masquage.

7. Composition aqueuse d'encre pigmentée pour marqueur de tableau comme décrit dans la revendication 1 ou 2, **caractérisée en ce que** le pigment de masquage est un noir de carbone.

8. Composition aqueuse d'encre pigmentée pour marqueur de tableau comme décrit dans l'une quelconque des revendications 1 à 7, **caractérisée en ce qu'**elle comprend en outre un colorant en plus du pigment de masquage.

9. Composition aqueuse d'encre pigmentée pour marqueur de tableau comme décrit dans l'une quelconque des revendications 1 à 8, **caractérisée en ce qu'**elle comprend en outre un solvant organique soluble dans l'eau.

10. Composition aqueuse d'encre pigmentée pour marqueur de tableau comme décrit dans l'une quelconque des revendications 1 à 9, **caractérisée en ce que** le pH de la composition d'encre est de 6,5 à 10,5.
